# EUROPÄISCHE PATENTANMELDUNG

(11) **EP 3 437 479 A1**
(43) Veröffentlichungstag der Anmeldung: **06.02.2019**
(21) Anmeldenummer: 17184645.4
(22) Anmeldetag: 03.08.2017
(51) Int. Cl.: A21C 15/04, A23G 3/20

(54) **BEARBEITUNGSSTATION ZUR BILDUNG VON WAFFELFORMKÖRPERN MIT EINER MITFAHRENDEN STANZE**

(71) Anmelder: Haas Food Equipment GmbH, 1210 Wien (AT)
(72) Erfinder: Zwanzinger, Gerhard, 2202 Königsbrunn (AT); Buczolits, Peter, 2000 Stockerau (AT)
(74) Vertreter: Puchberger & Partner Patentanwälte

(57) **Zusammenfassung**

Bearbeitungsstation zur Bildung von Waffelformkörpern (1) durch Abtrennen von Verbindungsstegen (2) von einem aus den Waffelformkörpern (1) und den Verbindungsstegen (2) zusammengesetzten Backzusammenhang (3), umfassend eine Trennvorrichtung (4) zum Abtrennen der Verbindungsstege (2) des Backzusammenhangs (3), mindestens eine Haltevorrichtung (5) zur Halterung des Backzusammenhangs (3) und der Waffelformkörper (1) des Backzusammenhangs (3) in einem Haltebereich (6) der Haltevorrichtung (5), und eine Fördervorrichtung (7), die zur kontinuierlichen Förderung der Haltevorrichtung (5) durch die Trennvorrichtung (4) entlang einer Förderrichtung (12) eingerichtet ist, wobei die Trennvorrichtung (4) einen Grundkörper (8) aufweist, der über eine Bewegungsvorrichtung (9) bewegbar angeordnet ist wobei der Grundkörper (8) an seiner der Fördervorrichtung (7) zugewandten Seite mit mindestens einem Stanzwerkzeug (11) zum Abtrennen mindestens eines Verbindungsstegs (2) versehen ist, wobei der Grundkörper (8) mit dem mindestens einen Stanzwerkzeug (11) als Stanze zur Trennung der Verbindungsstege (2) von den Waffelformkörpern (1) ausgebildet ist.

## Beschreibung

Die Erfindung betrifft eine Bearbeitungsstation gemäß den Merkmalen des Oberbegriffs des unabhängigen Patentanspruchs.

Insbesondere betrifft die Erfindung eine Bearbeitungsstation, in der als Hohlwaffenschalen ausgebildete Waffelformkörper von einem Backzusammenhang abgetrennt werden, um aus diesen Waffelformkörpern essbare Produkte zu bilden. Zur Bildung der Waffelformkörper wird in einem ersten Schritt in einer Backmaschine ein sogenannter Backzusammenhang gebacken. Dieser Backzusammenhang entspricht einem gebackenen Waffelblatt bzw. einem gebackenen Hohlwaffelblatt, das im Wesentlichen durch die Waffelformkörper und durch Verbindungsstege gebildet oder zusammengesetzt ist. Die Verbindungsstege verbinden die einzelnen Waffelformkörper des Backzusammenhangs miteinander. In der Regel ist der Backzusammenhang ein im Wesentlichen plattenförmiger Waffelkörper, bei dem die entlang einer Ebene angeordneten Verbindungsstege mehrere Waffelformkörper miteinander verbinden. Die Waffelformkörper stehen in der Regel von den Verbindungsstegen ab. Insbesondere weicht der Verlauf der Waffelformkörper vom Verlauf der Verbindungsstege ab. Durch Abtrennen der Verbindungsstege von den Waffelformkörpern werden einzelne Waffelformkörper gebildet. Diese Waffelformkörper können in weiterer Folge die Endprodukte sein. Gegebenenfalls werden die Waffelformkörper mit einer essbaren Creme gefüllt und/oder beschichtet, um Endprodukte zu bilden.

Gemäß Stand der Technik sind Trennvorrichtungen zur Vereinzelung von Waffelformkörpern bekannt, bei denen die Verbindungsstege durch eine Sägevorrichtung abgesägt oder abgefräst werden. Die Trennung erfolgt dabei entlang jener Ebene, in der auch die Verbindungsstege verlaufen. Derartige Vorrichtungen können jedoch nur für Waffelformkörper eingesetzt werden, die einseitig von den Verbindungsstegen abstehen. Darüber hinaus dürfen diese Backprodukte auch nur von jener Seite der Verbindungsstege abstehen, die dem Trennwerkzeug abgeneigt ist. Anderenfalls würde das Trennwerkzeug die Waffelformkörper zerstören.

Aufgabe der Erfindung ist es nun, die Nachteile des Standes der Technik zu überwinden und insbesondere eine Bearbeitungsstation zur Bildung von Waffelformkörpern durch Abtrennen der Verbindungsstege des Backzusammenhangs bereitzustellen, in der neuartige Formen von Waffelformkörpern bearbeitet oder vereinzelt werden können. Insbesondere betrifft dies Waffelformkörper, bei denen die Backprodukte von den Verbindungsstegen abstehen. Bevorzugt können durch die erfindungsgemäße Bearbeitungsstation Waffelformkörper, insbesondere Backprodukte, vereinzelt werden, die beidseitig von den Verbindungsstegen abstehen und/oder die Richtung Stanzwerkzeug abstehen.

Die erfindungsgemäße Aufgabe wird insbesondere durch die Merkmale des unabhängigen Patentanspruchs gelöst.

Insbesondere betrifft die Erfindung eine Bearbeitungsstation zur Bildung von Waffelformkörpern durch Abtrennen von Verbindungsstegen von einem aus den Waffelformkörpern und den Verbindungsstegen zusammengesetzten Backzusammenhang, umfassend eine Trennvorrichtung zum Abtrennen der Verbindungsstege des Backzusammenhangs, mindestens eine Haltevorrichtung zur Halterung des Backzusammenhangs und der Waffelformkörper des Backzusammenhangs in einem Haltebereich der Haltevorrichtung, und eine Fördervorrichtung, die zur kontinuierlichen Förderung der Haltevorrichtung durch die Trennvorrichtung entlang einer Förderrichtung eingerichtet ist, wobei die Trennvorrichtung einen Grundkörper aufweist, der über eine Bewegungsvorrichtung bewegbar angeordnet ist, wobei der Grundkörper an seiner der Fördervorrichtung zugewandten Seite mit mindestens einem Stanzwerkzeug zum Abtrennen mindestens eines Verbindungsstegs versehen ist.

Bevorzugt ist vorgesehen, dass der Grundkörper mit dem mindestens einen Stanzwerkzeug als Stanze zur Trennung der Verbindungsstege von den Waffelformkörpern ausgebildet ist oder wirkt.

Bevorzugt ist vorgesehen, dass die Bewegung der Fördervorrichtung mit der Stanzbewegung des Grundkörpers und des Stanzwerkzeugs und mit der Bewegungsvorrichtung synchronisiert ist.

Gegebenenfalls ist vorgesehen, dass die Haltevorrichtung als Gegenhalter für die Stanze ausgebildet ist oder wirkt, und insbesondere, dass das Stanzwerkzeug zum Abtrennen der Verbindungsstege an der entlang der Förderrichtung bewegten Haltevorrichtung aufsetzt.

Gegebenenfalls ist vorgesehen, dass die Haltevorrichtung eine oder mehrere der Form des Backzusammenhangs angepasste Freistellungen oder Vertiefungen zur Aufnahme der vom Backzusammenhang Richtung Haltevorrichtung abstehenden Backprodukte aufweist.

Gegebenenfalls ist vorgesehen, dass die Haltevorrichtung im Bereich der Freistellungen oder Vertiefungen eine oder mehrere der Form des Backzusammenhangs angepasste Halteflächen zur Anlage der Waffelformkörper oder zur Anlage der Verbindungsstege des Backzusammenhangs umfasst.

Gegebenenfalls ist vorgesehen, dass mit einer Unterdruckquelle in Kontakt stehende Saugöffnungen zur Halterung der Waffelformkörper des Backzusammenhangs an der Haltevorrichtung und zur Halterung der Backprodukte in den Freistellungen oder Vertiefungen vorgesehen sind.

Gegebenenfalls ist vorgesehen, dass die Haltevorrichtung als Saugplatte ausgebildet ist.

Gegebenenfalls ist vorgesehen, dass das mindestens eine Stanzwerkzeug den Grundkörper Richtung Haltevorrichtung überragt, und dass der Grundkörper und/oder das Stanzwerkzeug mindestens eine, bevorzugt mehrere, der Form des Backzusammenhangs angepasste Freistellungen oder Vertiefungen zur Aufnahme der vom Backzusammenhang Richtung Grundkörper abstehenden Backprodukte aufweist.

Gegebenenfalls ist vorgesehen, dass an dem Grundkörper mehrere Stanzwerkzeuge vorgesehen sind.

Gegebenenfalls ist vorgesehen, dass der Grundkörper im Wesentlichen entlang der gesamten Breite des Haltebereichs mit einem Stanzwerkzeug oder mit mehreren Stanzwerkzeugen versehen ist.

Gegebenenfalls ist vorgesehen, dass die Stanzwerkzeuge und/oder deren Schneiden im Wesentlichen entlang einer ebenen Fläche verlaufen oder abschließen, wobei die ebene Fläche beim Stanzen insbesondere parallel zum Verlauf der Haltevorrichtung angeordnet ist.

Gegebenenfalls ist vorgesehen, dass der von der Bewegungsvorrichtung bewegte Grundkörper, zur Ausführung einer Stanzbewegung, einen translatorischen Freiheitsgrad normal zur Förderrichtung aufweist, und dass der von der Bewegungsvorrichtung bewegte Grundkörper, zur Ausführung der Stanzbewegung während einer Bewegung der Haltevorrichtung und des Backzusammenhangs entlang der Förderrichtung, einen translatorischen Freiheitsgrad entlang der Förderrichtung aufweist.

Gegebenenfalls ist vorgesehen, dass die Stanzwerkzeuge mit der Bewegung der Haltevorrichtung derart synchronisiert sind, dass zwischen den Stanzwerkzeugen und den Haltevorrichtungen kein Schlupf auftritt und insbesondere, dass die Bewegungsgeschwindigkeit der Schneiden der Bewegungsgeschwindigkeit des Backzusammenhangs bzw. der Haltevorrichtungen entspricht.

Gegebenenfalls ist vorgesehen, dass am Grundkörper mehrere der Form und der Anzahl der Waffelformkörper eines Backzusammenhangs angepasste Stanzwerkzeuge angeordnet sind.

Gegebenenfalls ist vorgesehen, dass mehrere Haltevorrichtungen vorgesehen sind, dass die Fördervorrichtung als Endlosförderer ausgebildet ist, dass die Haltevorrichtungen aneinandergereiht entlang der Fördervorrichtung angeordnet sind, und dass die Haltevorrichtungen von der Fördervorrichtung kontinuierlich durch die Trennvorrichtung bewegt werden oder bewegbar sind, wobei die Haltevorrichtungen von der Fördervorrichtung nacheinander, insbesondere von einem Aufnahmebereich zur Aufnahme der Backzusammenhänge, durch die Trennvorrichtung und zu einem Entnahmebereich zur Entnahme der Waffelformkörper bewegt werden oder bewegbar sind.

Gegebenenfalls ist vorgesehen, dass der Grundkörper und/oder die Stanzwerkzeuge bei einer Bewegung der Bewegungsvorrichtung parallel geführt ist oder sind.

Insbesondere betrifft die Erfindung eine Anordnung eines aus Waffelformkörpern und Verbindungsstegen zusammengesetzten Backzusammenhangs und einer erfindungsgemäßen Bearbeitungsstation.

Gegebenenfalls ist bei der Anordnung vorgesehen, dass die Waffelformkörper beidseitig von den Verbindungsstegen abstehen und/oder dass die Waffelformkörper von den Verbindungsstegen Richtung Stanzwerkzeug abstehen.

Die erfindungsgemäße Bearbeitungsstation ist bevorzugt dazu geeignet und/oder eingerichtet, auf einem kontinuierlich arbeitenden Endlosförderer geförderte Waffelblätter zu bearbeiten. Die Waffelblätter umfassen bevorzugt als Hohlwaffelschalen ausgebildete Waffelformkörper, die durch Verbindungsstege miteinander verbunden sind. Diese Verbindungsstege sollen abgetrennt werden.

Bevorzugt ist vorgesehen, dass an dem Grundkörper mehrere Stanzwerkzeuge vorgesehen sind. Die Schneiden der Stanzwerkzeuge verlaufen bevorzugt entlang einer geschlossenen Kontur. Diese Kontur ist bevorzugt der Form der zu vereinzelnden Waffelformkörper angepasst. Insbesondere ist die endgültige Form der Waffelformkörper durch die Kontur der Schneide des jeweiligen Stanzwerkzeugs bestimmt.

Die Waffelformkörper und/oder die Verbindungsstege werden bei der Bearbeitung bevorzugt an einer Haltevorrichtung gehalten. Die Haltevorrichtung wird bevorzugt kontinuierlich entlang einer Förderrichtung gefördert. Die Bewegung der Haltevorrichtung und die Bewegung der Stanzwerkzeuge sind bevorzugt synchronisiert, sodass die Stanzwerkzeuge derart gegenüber der Haltevorrichtung und der an der Haltevorrichtung angeordneten Waffelformkörper positioniert werden, dass die gewünschte Form der Waffelformkörper ausgeschnitten bzw. ausgestanzt wird.

In allen Ausführungsformen ist bevorzugt vorgesehen, dass die Synchronisierung der Stanzwerkzeuge gegenüber der Haltevorrichtung und/oder dem zu bearbeitenden Backzusammenhang derart ausgeführt ist, dass die Stanzwerkzeuge bei der Bearbeitung dieselbe Geschwindigkeit aufweisen, wie der Backzusammenhang bzw. wie die Haltevorrichtung. Insbesondere ist bevorzugt vorgesehen, dass entlang der Bewegungsrichtung der zu bearbeitenden Waffelblätter kein Schlupf bzw. keine Relativbewegung der Stanzwerkzeuge gegenüber dem Backzusammenhang gegeben ist.

Zur Bewegung der Stanzwerkzeuge ist eine Bewegungsvorrichtung vorgesehen. Diese Bewegungsvorrichtung greift beispielsweise am Grundkörper der Trennvorrichtung an und ist dazu geeignet und/oder eingerichtet, eine vordefinierte Bewegung auszuführen. Die Bewegung ist insbesondere derart ausgestaltet, sodass die Waffelformkörper während der Bewegung der Haltevorrichtungen entlang der Fördervorrichtung ausgestanzt werden können. Hierzu werden der Grundkörper und damit auch die Stanzwerkzeuge mit der Geschwindigkeit der Haltevorrichtung bzw. des Backzusammenhangs über eine gewisse Strecke mitgeführt. Diese Bewegungskomponente verläuft somit entlang der Förderrichtung des Backzusammenhangs und insbesondere auch zumindest abschnittsweise mit derselben Geschwindigkeit. Eine zweite Komponente der Bewegung des Grundkörpers verläuft im Wesentlichen normal zur Förderrichtung des Backzusammenhangs. Diese Querbewegung ist insbesondere zur Ausführung der Stanzbewegung notwendig.

In allen Ausführungsformen kann vorgesehen sein, dass der Grundkörper mit den Stanzwerkzeugen in eine entlang der Förderrichtung gesehene hintere Position befördert wird, dort auf die bewegte Haltevorrichtung von oben aufgesetzt wird, wobei bei diesem Aufsetzen der Grundkörper und die Stanzwerkzeuge mit der Geschwindigkeit der Haltevorrichtung mitgeführt werden. Durch dieses Aufsetzen kann ein Ausstanzen der Waffelformkörper während der kontinuierlichen Bewegung der Waffelformkörper an den Haltevorrichtungen erfolgen. Sind die Waffelformkörper ausgestanzt, so kann der Grundkörper und die Schneidwerkzeuge wieder von der Haltevorrichtung entfernt werden. In weiterer Folge kann der Grundkörper wieder in eine, entlang der Förderrichtung gesehenen, vordere Stellung gebracht werden, um den nächsten Backzusammenhang zu bearbeiten.

Als Gegenhalter für die Stanzbewegung dient vorzugsweise die Haltevorrichtung. Dabei können die Schneiden beispielsweise stumpf auf eine Fläche der Haltevorrichtung aufsetzen. Alternativ können an der Haltevorrichtung Gegenschneiden vorgesehen sein.

Bevorzugt ist der Grundkörper gegenüber dem Verlauf der Haltevorrichtungen und/oder der Förderrichtung parallel geführt. Diese Parallelführung und insbesondere die Mitführung des Grundkörpers, der Stanzwerkzeuge und der Haltevorrichtung kann über herkömmliche Mittel erfolgen.

In weiterer Folge wird die Erfindung anhand von exemplarischen, nicht einschränkenden Ausführungsformen weiter beschrieben.
Fig. 1 zeigt eine Schrägansicht maßgeblicher Komponenten einer erfindungsgemäßen Bearbeitungsstation.
Fig. 2 zeigt eine Ansicht einer schematischen Darstellung maßgeblicher Komponenten einer erfindungsgemäßen Bearbeitungsstation und deren Trennvorrichtung.

Wenn nicht anders angegeben, so entsprechen die Bezugszeichen folgenden Komponenten:
Waffelformkörper 1, Verbindungssteg 2, Backzusammenhang 3, Trennvorrichtung 4, Haltevorrichtung 5, Haltebereich 6, Fördervorrichtung 7, Grundkörper 8, Bewegungsvorrichtung 9, Arm 10, Stanzwerkzeug 11, Förderrichtung 12, Haltefläche 13, Unterdruckquelle 14, Saugöffnung 15, Aufnahmebereich 16, Breite (des Haltebereichs) 17, Schneide 18, Freistellung 19, Entnahmebereich 20.

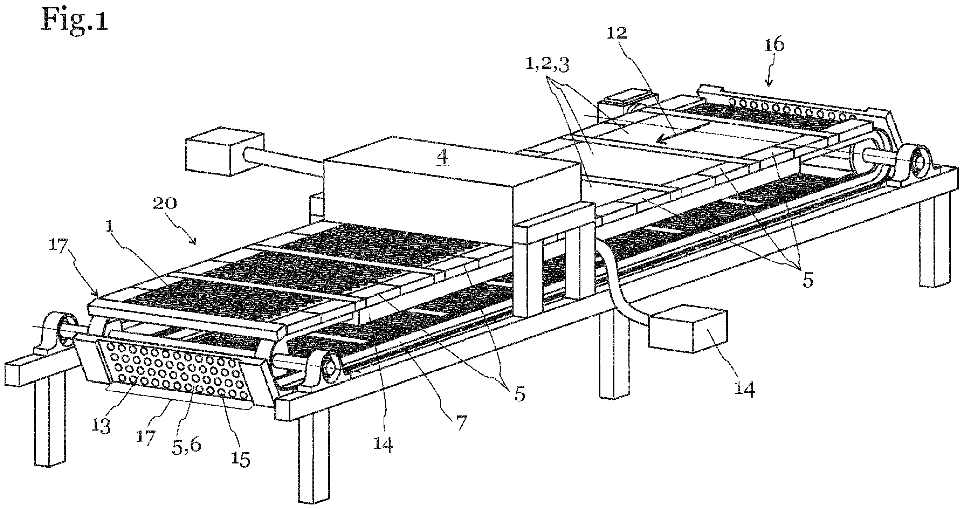

Fig. 1 zeigt eine Bearbeitungsstation in einer schematischen Schrägansicht. Diese umfasst eine Fördervorrichtung 7 zur kontinuierlichen oder intermittierenden Förderung mehrerer Haltevorrichtungen 5. Die Fördervorrichtung 7 ist in der vorliegenden Ausführungsform als Endlosförderer ausgebildet, entlang dessen Erstreckungsrichtung mehrere Haltevorrichtungen 5 aneinandergereiht angeordnet sind. Die Fördervorrichtung 7 umfasst eine obere Transportfläche und eine untere Transportfläche. Entlang der oberen Transportfläche ist in der vorliegenden Ausführungsform die Trennvorrichtung 4 vorgesehen. An den Haltevorrichtungen 5 ist entlang der Förderrichtung 12 vor der Trennvorrichtung 4 jeweils ein Backzusammenhang 3 angeordnet. Dieser Backzusammenhang 3 umfasst in allen Ausführungsformen mindestens einen Waffelformkörper 1 und einen den Waffelformkörper 1 umgebenden Steg, insbesondere mindestens einen Verbindungssteg 2, wobei bevorzugt, wie auch in dieser Ausführungsform, mehrere Waffelformkörper 1 durch die Verbindungsstege 2 zu einem Backzusammenhang 3 zusammengesetzt sind.

Durch die Trennvorrichtung 4 können die Verbindungsstege 2 von den Waffelformkörpern 1 abgetrennt werden. Die Haltevorrichtungen 5 wirken bevorzugt als Saugplatten. Hierzu ist eine Unterdruckquelle 14 vorgesehen, die in Saugöffnungen 15 der Haltevorrichtungen 5 münden, um den Backzusammenhang 3 bzw. die Verbindungsstege 2 und/oder die Waffelformkörper 1 mit einer Haltekraft zu halten. Entlang der Förderrichtung 12, nach der Trennvorrichtung 4, werden ausschließlich die Waffelformkörper 1 an den Haltevorrichtungen 5 gehalten. Die Verbindungsstege 2 wurden in diesem Bereich bereits von der Trennvorrichtung 4 abgetrennt und über eine nicht dargestellte Abführvorrichtung entfernt. Gemäß der vorliegenden Ausführungsform ist vorgesehen, dass die Haltevorrichtungen 5 von der Fördervorrichtung 7 nacheinander von einem Aufnahmebereich 16 zur Aufnahme der Backzusammenhänge 3 durch eine Trennvorrichtung 4 und weiter zu einem Entnahmebereich 20 zur Entnahme der Waffelformkörper 1 bewegt werden oder bewegbar sind.

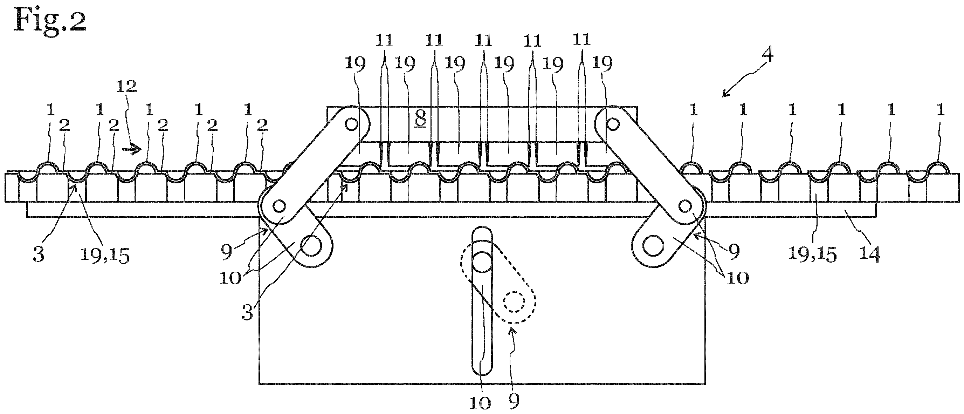

Fig. 2 zeigt maßgebliche Komponenten der erfindungsgemäßen Bearbeitungsstation und insbesondere der Trennvorrichtung 4. Die Bearbeitungsstation ist dazu geeignet und/oder eingerichtet, Waffelformkörper 1 durch Abtrennen der Verbindungsstege 2 zu vereinzeln. So wird ein von einer Backmaschine kommender Backzusammenhang 3, der Waffelformkörper 1 und Verbindungsstege 2 umfasst, in der Trennvorrichtung 4 bearbeitet. Die Backzusammenhänge 3 werden jeweils auf einer Haltevorrichtung 5 transportiert, wobei die Haltevorrichtungen 5 entlang einer Fördervorrichtung 7 bewegt werden. Die Haltevorrichtungen 5 umfassen insbesondere einen Haltebereich 6, in dem jeweils ein Backzusammenhang 3 oder mehrere Backzusammenhänge 3 transportiert und gehalten werden.

Die Trennvorrichtung 4 umfasst einen Grundkörper 8. An dem Grundkörper 8 ist mindestens ein Stanzwerkzeug 11 vorgesehen, wobei in der vorliegenden Ausführungsform mehrere Stanzwerkzeuge 11 vorgesehen sind. Diese Stanzwerkzeuge 11 ragen vom Grundkörper 8 Richtung Haltevorrichtung 5. Zur Relativbewegung der Stanzwerkzeuge 11 gegenüber der Haltevorrichtung 5 ist eine Bewegungsvorrichtung 9 vorgesehen. Die Bewegungsvorrichtung 9 kann als herkömmliche Bewegungsvorrichtung ausgebildet sein, die dazu geeignet und/oder eingerichtet ist, eine Stanzbewegung während der Förderung, insbesondere der kontinuierlichen Förderung, der Backzusammenhänge 3 auf den Haltevorrichtungen 5 durchzuführen.

Die Haltevorrichtungen 5 umfassen bevorzugt eine Haltefläche 13, an der jeweils ein Backzusammenhang 3 gehalten wird. Dieser Backzusammenhang 3 wird in weiterer Folge durch die Trennvorrichtung 4 befördert, um die Verbindungsstege 2 von den Waffelformkörpern 1 zu trennen. Zur Halterung der Waffelformkörper 1 und/oder des Backzusammenhangs 3 sind bevorzugt Saugöffnungen 15 vorgesehen, die von einer Unterdruckquelle 14 mit einem Unterdruck beaufschlagt sind, um die Waffelformkörper 1 bzw. den Backzusammenhang 3 mit einer Haltekraft zu halten.

Die Bewegungsvorrichtung 9 ist derart ausgestaltet, dass die Stanzwerkzeuge 11 einerseits entlang der Förderrichtung 12 und gegen die Förderrichtung 12 bewegt werden können und andererseits, dass die Stanzwerkzeuge 11 normal bzw. quer zur Förderrichtung 12 bewegt werden können. Dadurch ist es möglich, ein Ausstanzen der Waffelformkörper 1 aus dem Backzusammenhang 3 während einer kontinuierlichen Förderung der Backzusammenhänge 3 auf der Fördervorrichtung 7 durchzuführen. Hierzu wird der Grundkörper 8 in eine, entlang der Förderrichtung 12 gesehenen, vordere Position bewegt und in weiterer Folge auf den Backzusammenhang 3 bzw. auf die Haltevorrichtung 5 aufgesetzt, um eine Stanzbewegung zu bewirken. Bei diesem Aufsetzen wird der Grundkörper 8 bzw. dessen Stanzwerkzeuge 11 mit der Geschwindigkeit des Backzusammenhangs 3 bzw. der Haltevorrichtung 5 mitgeführt. Ist die Stanzbewegung durchgeführt, so kann der Grundkörper 8 bzw. dessen Stanzwerkzeuge 11 in einem entlang der Förderrichtung 12 weiter hinten angeordneten Bereich wieder abgehoben werden. In weiterer Folge kann der Grundkörper 8 wieder in einen weiter hinten gelegenen Bereich gefördert werden, um eine erneute Stanzbewegung durchzuführen.

Die Stanzwerkzeuge 11 umfassen jeweils eine Schneide 18. Diese Schneide 18 ist in allen Ausführungsformen bevorzugt entlang einer geschlossenen Kontur angeordnet, sodass ein Ausstanzen der Waffelformkörper 1 ermöglicht ist. Im Inneren der Stanzwerkzeuge 11 bzw. der Kontur der Schneide 18 sind bevorzugt je eine Freistellung 19 vorgesehen. Diese Freistellungen 19 dienen der Aufnahme von Teilen der Waffelformkörper 1, die sich Richtung Grundkörper 8 bzw. Richtung Stanzwerkzeug 11 erstrecken. Dadurch ist es möglich, Waffelformkörper 1 auszustanzen und zu vereinzeln, die sich von den Verbindungsstegen 2 Richtung Stanzwerkzeug 11 erstrecken und/oder beidseitig von den Verbindungsstegen 2 abstehen.

Bevorzugt sind bei beidseitig von den Verbindungsstegen 2 abstehendenden Waffelformkörpern 1 auch in den Haltevorrichtungen 5 Freistellungen 19 vorgesehen. Insbesondere können diese Freistellungen 19 gleichzeitig die Saugöffnungen 15 sein.

In der vorliegenden Ausführungsform umfasst die Bewegungsvorrichtung 9 mehrere Arme 10, die über kinematische Zwänge derart miteinander gekoppelt sind, dass die gewünschte Stanzbewegung ausgeführt werden kann. Insbesondere können in der vorliegenden Ausführungsform die Arme 10 über Drehantriebe angetrieben werden, sodass der Grundkörper 8 im Wesentlichen entlang einer geschlossenen Kontur bewegt wird, die zumindest teilweise entlang und teilweise gegen die Förderrichtung 12 verläuft. Zur Synchronisierung können die Antriebe zur Bewegung der Arme 10 durch geeignete Steuerungs- oder Regelungsmaßnahmen mit der Bewegung der Haltevorrichtungen 5 synchronisiert werden.

Gegebenenfalls geschieht eine mechanische Synchronisierung, beispielsweise über eine Halterung der Stanzwerkzeuge 11 an der Haltevorrichtung 5 während der Stanzbewegung. Bei einer derartigen Synchronisierung ist eine gewisse Elastizität bzw. spielbehaftete Lagerung zur Vermeidung von Doppelpassungen notwendig bzw. vorteilhaft.

## Patentansprüche

1. Bearbeitungsstation zur Bildung von Waffelformkörpern (1) durch Abtrennen von Verbindungsstegen (2) von einem aus den Waffelformkörpern (1) und den Verbindungsstegen (2) zusammengesetzten Backzusammenhang (3), umfassend:
- eine Trennvorrichtung (4) zum Abtrennen der Verbindungsstege (2) des Backzusammenhangs (3),
- mindestens eine Haltevorrichtung (5) zur Halterung des Backzusammenhangs (3) und der Waffelformkörper (1) des Backzusammenhangs (3) in einem Haltebereich (6) der Haltevorrichtung (5),
- und eine Fördervorrichtung (7), die zur kontinuierlichen Förderung der Haltevorrichtung (5) durch die Trennvorrichtung (4) entlang einer Förderrichtung (12) eingerichtet ist,
- wobei die Trennvorrichtung (4) einen Grundkörper (8) aufweist, der über eine Bewegungsvorrichtung (9) bewegbar angeordnet ist,
- wobei der Grundkörper (8) an seiner der Fördervorrichtung (7) zugewandten Seite mit mindestens einem Stanzwerkzeug (11) zum Abtrennen mindestens eines Verbindungsstegs (2) versehen ist,
**dadurch gekennzeichnet,**
- **dass** der Grundkörper (8) mit dem mindestens einen Stanzwerkzeug (11) als Stanze zur Trennung der Verbindungsstege (2) von den Waffelformkörpern (1) ausgebildet ist oder wirkt,
- und **dass** die Bewegung der Fördervorrichtung (7) mit der Stanzbewegung des Grundkörpers (8) und des Stanzwerkzeugs (11) und mit der Bewegungsvorrichtung (9) synchronisiert ist.

2. Bearbeitungsstation nach Anspruch 1, **dadurch gekennzeichnet,**
- **dass** die Haltevorrichtung (5) als Gegenhalter für die Stanze ausgebildet ist oder wirkt,
- und insbesondere, dass das Stanzwerkzeug (11) zum Abtrennen der Verbindungsstege (2) an der entlang der Förderrichtung (12) bewegten Haltevorrichtung (5) aufsetzt.

3. Bearbeitungsstation nach einem der Ansprüche 1 oder 2, **dadurch gekennzeichnet, dass** die Haltevorrichtung (5) eine oder mehrere der Form des Backzusammenhangs (3) angepasste Freistellungen (19) oder Vertiefungen zur Aufnahme der vom Backzusammenhang (3) Richtung Haltevorrichtung (5) abstehenden Backprodukte aufweist.

4. Bearbeitungsstation nach Anspruch 3, **dadurch gekennzeichnet, dass** die Haltevorrichtung (5) im Bereich der Freistellungen (19) oder Vertiefungen eine oder mehrere der Form des Backzusammenhangs (3) angepasste Halteflächen (13) zur Anlage der Waffelformkörper (1) oder zur Anlage der Verbindungsstege (2) des Backzusammenhangs (3) umfasst.

5. Bearbeitungsstation nach einem der Ansprüche 3 oder 4, **dadurch gekennzeichnet, dass** mit einer Unterdruckquelle (14) in Kontakt stehende Saugöffnungen (15) zur Halterung der Waffelformkörper (1) des Backzusammenhangs (3) an der Haltevorrichtung (5) und zur Halterung der Backprodukte in den Freistellungen (19) oder Vertiefungen vorgesehen sind.

6. Bearbeitungsstation nach einem der Ansprüche 1 bis 5, **dadurch gekennzeichnet, dass** die Haltevorrichtung (5) als Saugplatte ausgebildet ist.

7. Bearbeitungsstation nach einem der Ansprüche 1 bis 6, **dadurch gekennzeichnet,**
- **dass** das mindestens eine Stanzwerkzeug (11) den Grundkörper (8) Richtung Haltevorrichtung (5) überragt,
- und **dass** der Grundkörper (8) und/oder das Stanzwerkzeug (11) mindestens eine, bevorzugt mehrere, der Form des Backzusammenhangs (3) angepasste Freistellungen (19) oder Vertiefungen zur Aufnahme der vom Backzusammenhang (3) Richtung Grundkörper (8) abstehenden Backprodukte aufweist.

8. Bearbeitungsstation nach einem der Ansprüche 1 bis 7, **dadurch gekennzeichnet, dass** an dem Grundkörper (8) mehrere Stanzwerkzeuge (11) vorgesehen sind.

9. Bearbeitungsstation nach einem der Ansprüche 1 bis 8, **dadurch gekennzeichnet, dass** der Grundkörper (8) im Wesentlichen entlang der gesamten Breite (17) des Haltebereichs (6) mit einem Stanzwerkzeug (11) oder mit mehreren Stanzwerkzeugen (11) versehen ist.

10. Bearbeitungsstation nach einem der Ansprüche 1 bis 9, **dadurch gekennzeichnet, dass** die Stanzwerkzeuge (11) und/oder deren Schneiden (18) im Wesentlichen entlang einer ebenen Fläche verlaufen oder abschließen, wobei die ebene Fläche beim Stanzen insbesondere parallel zum Verlauf der Haltevorrichtung (5) angeordnet ist.

11. Bearbeitungsstation nach einem der Ansprüche 1 bis 10, **dadurch gekennzeichnet,**
- **dass** der von der Bewegungsvorrichtung (9) bewegte Grundkörper (8), zur Ausführung einer Stanzbewegung, einen translatorischen Freiheitsgrad normal zur Förderrichtung (12) aufweist,
- und **dass** der von der Bewegungsvorrichtung (9) bewegte Grundkörper (8), zur Ausführung der Stanzbewegung während einer Bewegung der Haltevorrichtung (5) und des Backzusammenhangs (3) entlang der Förderrichtung (12), einen translatorischen Freiheitsgrad entlang der Förderrichtung (12) aufweist.

12. Bearbeitungsstation nach einem der Ansprüche 1 bis 11, **dadurch gekennzeichnet, dass** die Stanzwerkzeuge (11) mit der Bewegung der Haltevorrichtung (5) derart synchronisiert sind, dass zwischen den Stanzwerkzeugen (11) und den Haltevorrichtungen (5) kein Schlupf auftritt und insbesondere, dass die Bewegungsgeschwindigkeit der Schneiden (18) der Bewegungsgeschwindigkeit des Backzusammenhangs (3) bzw. der Haltevorrichtungen (5) entspricht.

13. Bearbeitungsstation nach einem der Ansprüche 1 bis 12, **dadurch gekennzeichnet, dass** am Grundkörper (8) mehrere der Form und der Anzahl der Waffelformkörper (1) eines Backzusammenhangs (3) angepasste Stanzwerkzeuge (11) angeordnet sind.

14. Bearbeitungsstation nach einem der Ansprüche 1 bis 13, **dadurch gekennzeichnet,**
- **dass** mehrere Haltevorrichtungen (5) vorgesehen sind,
- **dass** die Fördervorrichtung (7) als Endlosförderer ausgebildet ist,
- **dass** die Haltevorrichtungen (5) aneinandergereiht entlang der Fördervorrichtung (7) angeordnet sind,
- und **dass** die Haltevorrichtungen (5) von der Fördervorrichtung (7) kontinuierlich durch die Trennvorrichtung (4) bewegt werden oder bewegbar sind,
- wobei die Haltevorrichtungen (5) von der Fördervorrichtung (7) nacheinander, insbesondere von einem Aufnahmebereich (16) zur Aufnahme der Backzusammenhänge (3), durch die Trennvorrichtung (4) und zu einem Entnahmebereich (20) zur Entnahme der Waffelformkörper (1) bewegt werden oder bewegbar sind.

15. Bearbeitungsstation nach einem der Ansprüche 1 bis 14, **dadurch gekennzeichnet, dass** der Grundkörper (8) und/oder die Stanzwerkzeuge (11) bei einer Bewegung der Bewegungsvorrichtung (9) parallel geführt ist oder sind.

16. **Anordnung** eines aus Waffelformkörpern (1) und Verbindungsstegen (2) zusammengesetzten **Backzusammenhangs** (3) und einer **Bearbeitungsstation** nach einem der vorangegangenen Ansprüche, wobei die Waffelformkörper (1) beidseitig von den Verbindungsstegen (2) abstehen und/oder wobei die Waffelformkörper (1) von den Verbindungsstegen (2) Richtung Stanzwerkzeug (11) abstehen.
